# EUROPEAN PATENT SPECIFICATION

(11) **EP 3 612 297 B1**
(45) Date of publication and mention of the grant of the patent: **08.09.2021**
(21) Application number: 18726217.5
(22) Date of filing: 18.04.2018
(51) Int. Cl.: B01F 15/06, B01F 9/10, A21C 1/14, A21C 1/02

(54) **MIXER WITH ROTATABLE BOWL AND METHOD FOR USING SAID MIXER**
MISCHER MIT DREHBARER SCHÜSSEL UND VERFAHREN ZUR VERWENDUNG DES MISCHERS
MÉLANGEUR À BOL ROTATIF ET PROCÉDÉ D'UTILISATION DUDIT MÉLANGEUR

(30) Priority: 19.04.2017 IT 201700042883
(43) Date of publication of application: 26.02.2020
(73) Proprietor: Escher Mixers S.r.l., 36034 Malo (VI) (IT)
(72) Inventor: COSARO, Alessandro, 36034 Malo (VI) (IT)
(74) Representative: Marchioro, Paolo
(86) International application number: PCT/IB2018/052694
(87) International publication number: WO 2018/193391

(56) References cited:
- EP-A1- 1 117 300
- EP-A1- 3 009 726
- US-A- 2 274 220
- US-A- 2 628 080
- US-A1- 2015 296 844

## Description

The invention regards a mixer with rotatable bowl, as well as a method for using such mixer with rotatable bowl.

Mixing machines for making bread, pasta and the like, also referred to as 'mixers', generally comprise a framework for supporting a bowl for containing a dough to be mixed and at least one mixing tool, driven to operate in the containment compartment of the bowl.

In order to improve the quality of the dough mixers with fixed bowl are currently known, in which such fixed bowl comprises an inner container at least partly surrounded by a jacket defining - with said inner container - an interspace for a cooling fluid, treated by a corresponding cooling circuit outside the bowl and directly connected to the aforementioned interspace.

Thus, the mixer is capable of processing the dough, keeping it at the ideal temperature for the development of gluten and below the rising limit.

However, these mixers reveal the drawback of the fixed bowl, where a rotatable bowl determines major advantages of different type, for example in terms of production speed, optimisation of the distribution of the dough in the bowl, and the like.

In mixers with rotatable bowl of the prior art, a generic rotatable bowl, in a normal operating configuration, generally rotates around a vertical axis.

In order to overcome the drawbacks of the mixers of the prior art, there have been provided, and they are also currently known, mixers with rotatable bowl whose interspace for a cooling fluid is interconnected with a cooling circuit.

A similar mixer is for example described in the European patent EP1117300.

Thus, the rotatable bowl is configured to rotate around a vertical axis during the operation of the at least one mixing tool arranged therein.

Such rotatable bowl is configured to rotate, in the use configuration thereof, around a vertical axis, where such rotation must be considered as a rotation by angles greater than 360°, i.e. a continuous rotation for a pre-established period of time in the same rotation direction.

The vertical axis X coincides with the symmetry axis of the rotatable bowl when the latter is in use configuration.

The rotation of the rotatable bowl, as mentioned above, may occur simultaneously with the operation of the mixing tool; thus, besides the mixing of a dough determined by the tool, there also occurs a mixing of the same dough determined by the rotation of the bowl in which the dough is arranged; the rotation of the bowl facilitates the continuous re-distribution of the dough in the bowl.

Such mixer with rotatable bowl has a stable connection between the cooling circuit and the interspace of the bowl, obtained in a particularly complex manner, with a hydraulic connection defined at the rotation axis of the bowl and comprising an axial sealing joint which is severely stressed by the rotary movement of the bowl.

Though efficient, such mixer is complex and expensive to manufacture, both in terms of components and in terms of assembly and thus manpower.

Furthermore, the stability of the hydraulic connection makes the sealing members more exposed to wear, with ensuing risks of malfunctioning and costs-related machine shut down to replace components.

The patent US2015296844 A1 discloses a mixer according to the preamble of claim 1. It describes a system consisting of hoppers, a cooling vat, motors, rotary reactor to produce nixtamal ready for grinding in a shorter amount of time and without the discharge of wastewater; this system comprises also a cooling vat capable of rotating around a horizontal axis which effectively cools the nixtamal faster, preparing the nixtamal in a shorter amount of time to be ground into its final dough product.

The rotation of this cooling vat is carried out at predetermined intervals and only to discharge the material at the end of the processing.

The task of the present invention is to provide a mixer with rotatable bowl capable of overcoming the aforementioned drawbacks and limits of the prior art.

In particular, an object of the invention is to provide a mixer with rotatable bowl whose bowl can be cooled in a simple and reliable manner.

Another object of the invention is to provide a mixer with rotatable bowl whose connection and hydraulic sealing elements are subjected to little or no wear.

A further object of the invention is to provide a mixer with rotatable bowl that is more robust and less subjected to machine shut downs with respect to the similar mixers of the known type.

Still another object of the invention is to provide a mixer with rotatable bowl with performance and efficiency not below the mixers of the known type.

A further object of the invention is to provide a method for using a mixer with rotatable bowl as the main task.

The aforementioned task and objects are obtained by a mixer with rotatable bowl according to claim 1.

Further characteristics of the mixer with rotatable bowl according to claim 1 are described in the dependent claims.

The aforementioned task and objects, alongside the advantages described hereinafter, shall be outlined in the description of an embodiment of the invention, provided solely by way of non-limiting example, with reference to the attached drawings wherein:
- figure 1 represents a perspective view of a mixer with rotatable bowl according to the invention;
- figure 2 represents a perspective cross-section of a rotatable bowl according to the invention;
- figure 3 represents a first perspective view of a component of the rotatable bowl according to the invention;
- figure 4 represents a second perspective view of the component of figure 3;

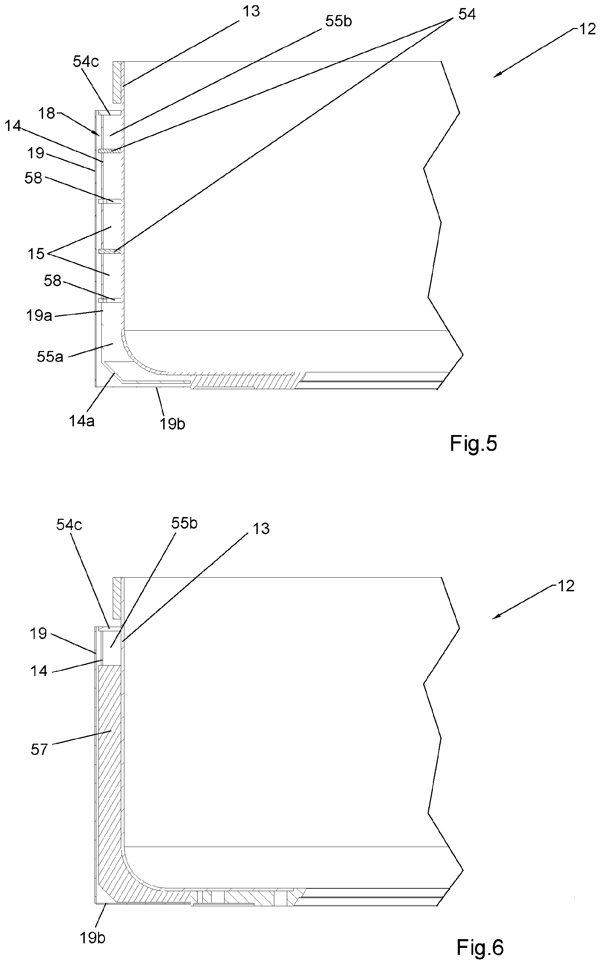

- figure 5 represents a portion of a first diametrical section of the rotatable bowl of a mixer according to the invention;
- figure 6 represents a portion of a second diametrical section of the rotatable bowl;

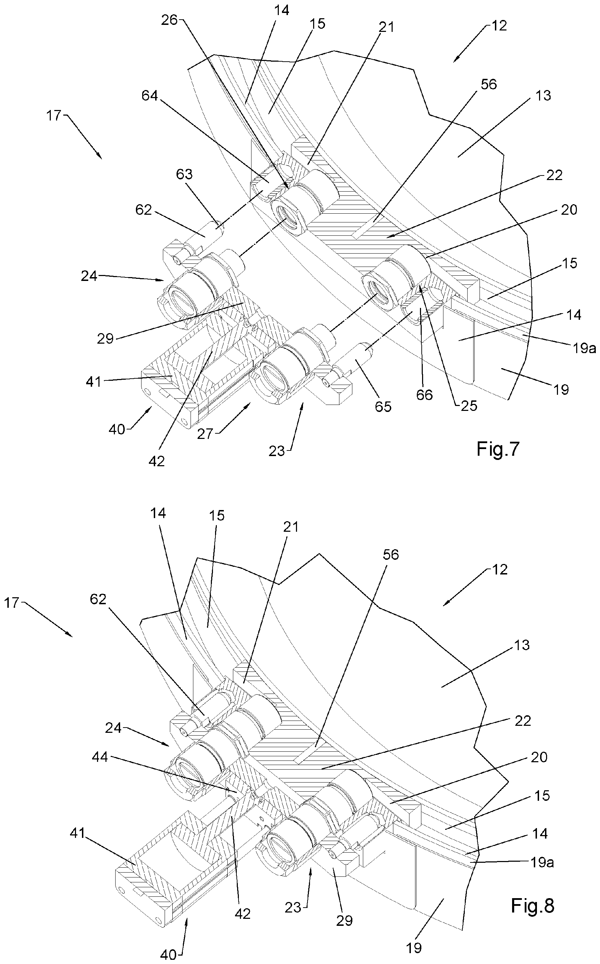

- figure 7 represents a perspective cross-section of the reversible connection means of a mixer according to the invention in a first operating configuration;
- figure 8 represents the same view of figure 7 in a second operating configuration;
- figure 9 represents a sectional lateral view of a first part of the reversible connection means;
- figure 10 represents a sectional lateral view of a second part of the reversible connection means;
- figure 11 represents a further perspective view of the connection means;
- figure 12 schematically represents a cooling circuit of the mixer according to the invention;
- figure 13 schematically represents a method of use of a mixer with rotatable bowl according to the invention;
- figure 14 represents a lateral view of a detail of the mixer according to the invention.

With reference to the aforementioned figures, a mixer with rotatable bowl according to the invention is indicated in its entirety with number **10.**

Such mixer **10** comprises a framework **11** for supporting a driven rotatable bowl **12,** for containing a dough, inside which there is driven to operate at least one driven mixing tool (not shown in the figures and to be deemed of the per se known type), such as - for example but not exclusively - a shaped blade, or a spatula, or a plurality of blades or a plurality of spatulas.

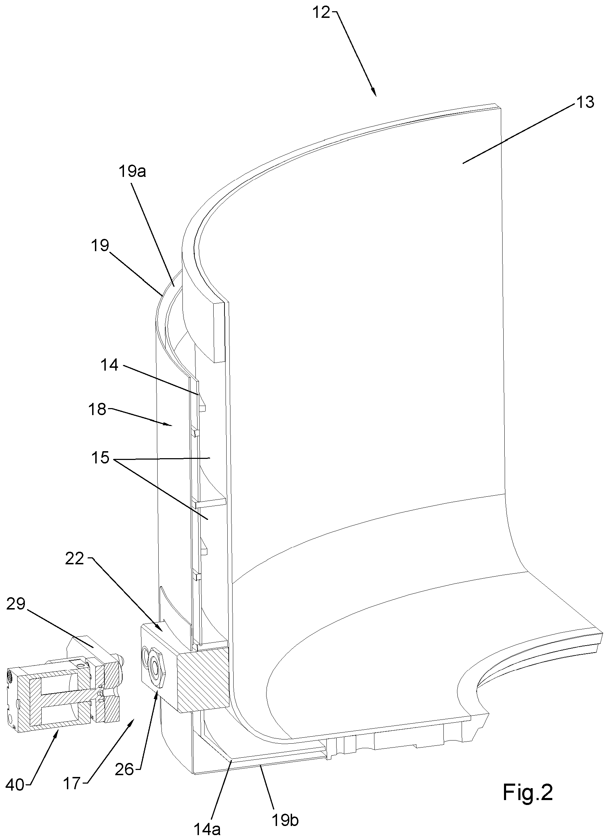

As clearly visible in figure 2, the rotatable bowl **12** comprises an inner container **13** laterally surrounded by means for the thermal treatment of the inner container **13.**

Such means for the thermal treatment of the inner container **13** are of the thermal exchange fluid type.

In the embodiment of the invention described herein, to be deemed a non-limiting example of the invention, such means for the thermal treatment of the inner container **13** consist of means for cooling the inner container **13.**

The thermal exchange fluid is a cooling fluid, for example glycol.

The thermal treatment means, hereinafter described for cooling during the mixing operations, shall be deemed similarly usable as thermal treatment means which are heating means, with the aim of heating during the mixing operations; similarly, the thermal treatment means shall be deemed as usable for pasteurisation operations, or, still, for maintaining a desired temperature.

The distinctiveness of the invention lies in the fact that said thermal treatment means comprise reversible connection means **17,** for filling the thermal treatment means with a thermal exchange fluid, such reversible connection means **17** being configured to alternatingly take a configuration selected from among
- a connection configuration, with the rotatable bowl **12** inoperative, for introducing and circulating the thermal exchange fluid in said thermal treatment means of the inner container **13,**
- a disconnection configuration, with the rotatable bowl **12** available for the rotation, and with the at least one driven mixing tool driven to operate in the rotatable bowl **12.**

Thus, the rotatable bowl **12** is configured to rotate during the operation of the at least one mixing tool arranged therein.

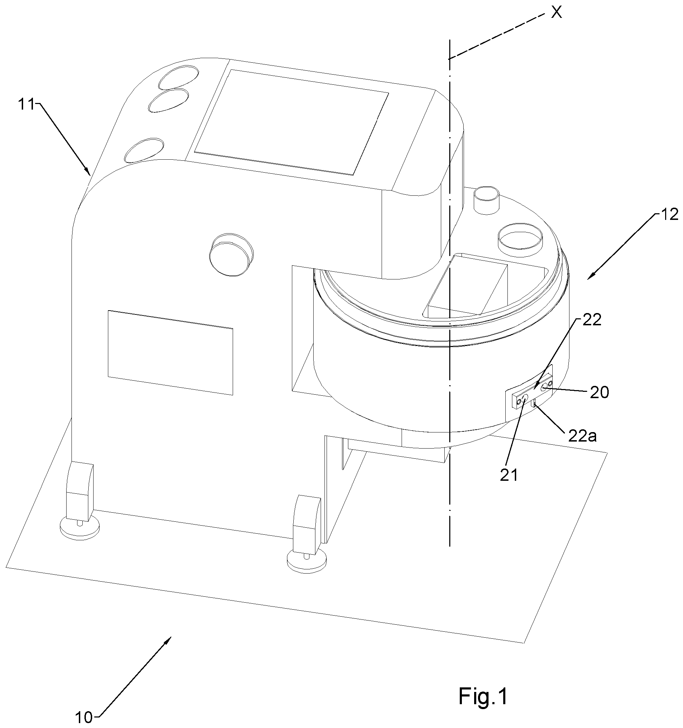

Such rotatable bowl **12** is configured to rotate, in use configuration, around a vertical axis **X,** clearly visible in figure 1.

The rotatable bowl **12** is suitable to rotate with respect to the vertical axis **X** by angles greater than 360°, in particular it is suitable to perform several complete sequential rotations, i.e. rotating continuously for a pre-established time interval in the same rotation direction.

The vertical axis **X** coincides with the symmetry axis of the rotatable bowl **12** when the latter is in use configuration.

In particular, in the embodiment of the mixer according to the invention, herein described by way of non-limiting example of the invention, the thermal treatment means with thermal exchange fluid comprise a jacket **14** laterally surrounding said inner container **13** to define - with the inner container **13** - an interspace **15** for the thermal exchange fluid.

The reversible connection means **17** determine the connection of the thermal treatment means with a circuit **16** for treating and circulating said thermal exchange fluid.

The rotatable bowl **12** has an outer insulating protection lining **18.**

Such outer lining **18** comprises an outer wall **19** defining - with the jacket **14** - a second interspace **19a** designated to contain a thermally insulating material. The jacket **14** comprises a lower corner portion **14a** extending to surround a peripheral portion of the bottom of the inner container **13.**

From the wall **19** there extends an annular lining **19b** suitable to cover part of the bottom of the bowl **12,** and in particular to cover the lower corner portion **14a.**

Such outer lining **18** counters the thermal exchange of the fluid, inside the jacket **14,** with the outside, so as to prevent the external temperature from affecting the thermal exchange fluid, the latter maintaining the ideal operating temperature as long as possible.

The rotatable bowl **12** comprises an inlet mouth **20** and an outlet mouth **21** for the interspace **15.**

Such inlet **20** and outlet **21** mouths are defined on a block **22** fixed to the rotatable bowl **12.**

The reversible connection means **17,** herein described by way of non-limiting example of the invention, comprise, for each of said inlet **20** and outlet **21** mouths, an automatic quick coupling **23** and **24** respectively.

Such automatic quick couplings **23** and **24** are driven to operate in a radial direction or in a direction parallel to a radial direction with respect to the rotation axis **X** of the rotatable bowl **12.**

The automatic quick coupling **23** and **24** is, for example, of the male-female type, whose first part **25** and **26** is carried by the block **22,** while a second corresponding part **27** and **28** is fixed to a moveable support plate **29.**

By way of example, each first part **25** and **26** consists of a female element of the corresponding automatic quick coupling **23** and **24,** while each second part **27** and **28** consists of a male element of the corresponding automatic quick coupling **23** and **24.**

Each first part **25** and **26** is connected to a line, either delivery or return, of the circuit **16** for the thermal exchange fluid of the rotatable bowl **12.**

Such automatic quick couplings **23** and **24** can be of the per se known type, for example of the concentric double-coupling type.

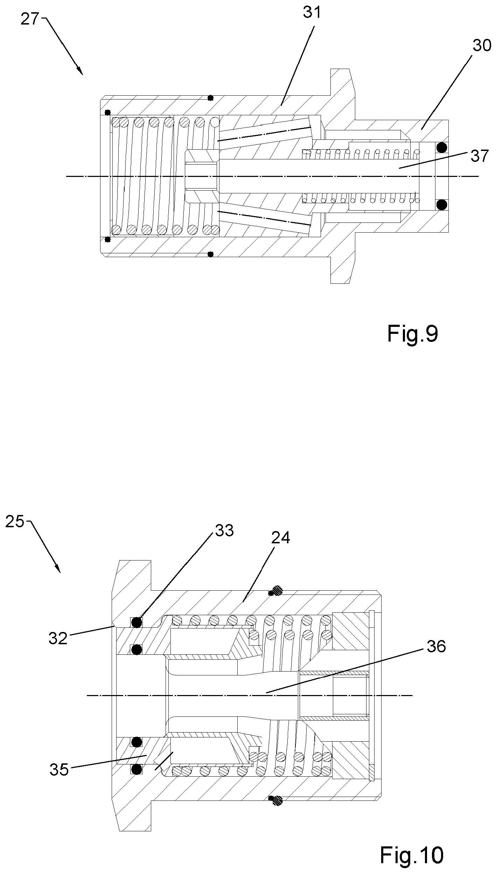

An automatic quick coupling **23** and **24** with concentric double-coupling provides for, for example, an outer collar **30** extending from the body **31** of a second part, for example the second part **27** as exemplified in figure 9, suitable to be inserted into a counter-shaped opening **32,** with sealing ring **33,** of the body **34** of the first corresponding part **25,** for pushing to recede a shutter bushing **35** inside the body **34** of the first part **25,** so as to determine a first coupling defining a sealing duct for the passage of the fluid; an axial stem **36,** visible in figure 10, present in the first part **25,** and integrally joined to the body **34** thereof, is revealed by the receding motion of the shutter bushing **35,** such axial stem **36** being designated to abut against a juxtaposed axial shutter **37** extending in the body **31** of the second part **27** and free to recede axially therein, so as to determine a second coupling suitable to open the communication between the two first **25** and second **27** parts.

Such automatic quick couplings **23** and **24** advantageously have annular seals, i.e. O-rings, made of silicone so as to resist against the chemical attack by the thermal exchange fluid.

The reversible connection means **17** also comprise actuator means for displacing said moveable support plate **29.**

Such actuator means for example consist of a pneumatic cylinder **40,** secured for a fixed part thereof to the framework **11** and for a moveable part thereof to the support plate **29.**

The pneumatic cylinder **40** comprises a casing **41** and a stem **42,** with piston.

The casing **41** defines the fixed part of the pneumatic cylinder **40** and it is fixed to the framework, while the stem **42** defines the moveable part and carries the support plate **29,** for example by means of an intermediate flange **44.**

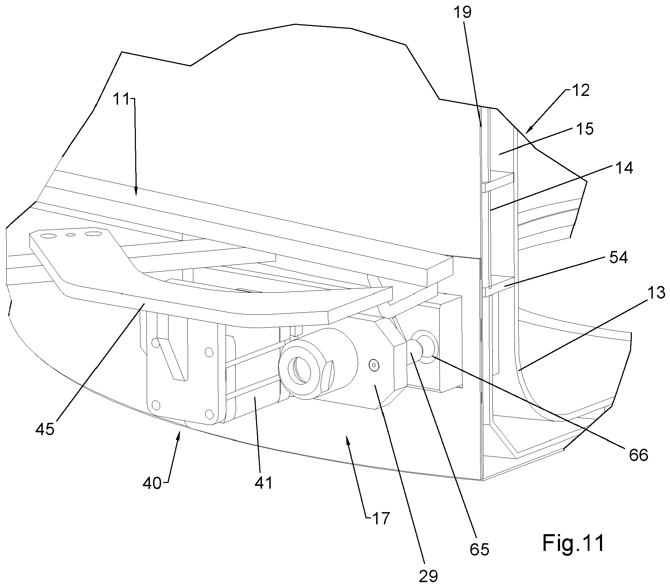

The casing **41** is fixed to the framework **11** through a bracket **45,** clearly visible in figure 11.

In said interspace **15** between the inner container **13** and the jacket **14** there is defined a labyrinth circuit **50,** whose inlet and outlet correspond to said inlet mouth **20** and outlet mouth **21** of the interspace **15,** and it is configured to conduct the thermal exchange fluid over the entire available outer surface of the inner container **13.**

The inlet **20** and outlet **21** mouths are approached to each other, so as to enable the simultaneous coupling of the automatic quick couplings **23** and **24** as described above.

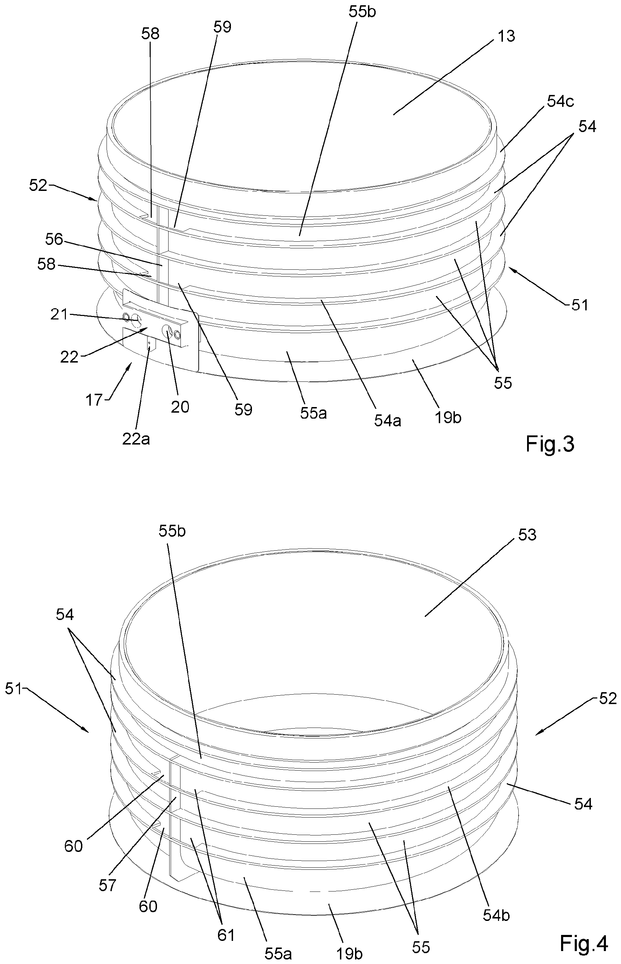

In the present embodiment, the labyrinth circuit **50** defined in the interspace **15** comprises two coil-like channels, respectively **51** and **52,** clearly visible in figures 3 and 4, communicating with each other, each of which extending to involve a semi-cylindrical portion of said interspace **15.**

Such coil-like channels **51** and **52** are defined by several coaxial annular partitions **54** where the reference axis is the rotation axis of the rotatable bowl **12,** extending over the entire radial width of the interspace **15,** defining several superimposed annular channels **55** surrounding the inner container **13.**

A lower annular channel **55a** of such annular channels **55** is involved by the inlet **20** and outlet **21** mouths.

Such annular channels **55** are shut off by two opposite vertical septa **56** and **57,** a first septum **56** being arranged between said inlet **20** and outlet **21** mouths, and a second septum **57** being arranged in a diametrically opposite position.

The first septum **56** is shaped so as to shut off all annular channels **55.**

The second septum **57** is shaped so that an upper annular channel **55b** is vacant, i.e. it is not shut off by such second septum **57.**

The annular partitions **54** have two passage openings, for example indicated with **58, 59, 60** and **61** in figures 3 and 4, one on one side and the other on the other side with respect to one of the two vertical septa **56** and **57** and in proximity of a corresponding vertical septum.

The two openings **58** and **59** of an annular partition **54,** for example a first annular partition **54a** in figure 3, are arranged at a first vertical septum, for example the front vertical septum **56,** while the two openings **60** and **61** of a previous or subsequent annular partition, for example the annular partition **54b** in figure 4, are arranged at the opposite vertical septum, for example the rear vertical septum **57.**

The annular partitions **54** and the vertical septa **56** and **57** determine the two coil-like channels **51** and **52** which are placed in mutual communication by means of the upper annular channel **55b.**

The upper annular partition **54c** is continuous and closes the interspace **15** at the top part.

In a variant embodiment of the invention, not illustrated for the sake of simplicity, the thermal treatment means with thermal exchange fluid consist of a tubular coil, for example made of metal material, copper in particular, reel-wound around the inner container of the rotatable bowl.

The reversible connection means **17** also comprise centring means for the proper connection of said automatic quick couplings **23** and **24.**

For example, such centring means comprise at least one centring relief **62,** for example a pin, with a frusto-conical or rounded or wedge-shaped end **63** extending from the support plate **29** to which it is fixed, suitable for insertion into a counter-shaped centring seat **64** fixed to the rotatable bowl **12,** for example defined in the block **22.**

In the embodiment described herein, there are present two centring reliefs **62** and **65,** and two corresponding centring seats **64** and **66.**

Each centring relief **62** and **65** extends from the support plate **29** covering a greater length with respect to the extent of projection on the same side of the support plate **29** of the second parts **27** and **28** of the automatic quick couplings **23** and **24** towards the block **22** carrying the first parts **25** and **26;** thus, the centring reliefs **62** and **65** shut off the inlet blocks of the respective centring seats **64** and **66** before the second parts **27** and **28** start coupling with the first parts **25** and **26,** thus ensuring the correct alignment of the automatic quick couplings **23** and **24** before the connection translation starts.

The mixer **10** according to the invention may also comprise a system for directing the rotatable bowl **12** for a first alignment of the first parts **25** and **26** with the respective second parts **27** and **28** of the automatic quick couplings **23** and **24.** Such direction system comprises a detection sensor **68,** for example an inductive sensor, fixed to the framework **11,** positioned and configured to detect a position marker, for example a sign, or a relief **22a** like in figures 1 and 3, defined on the rotatable bowl **12.**

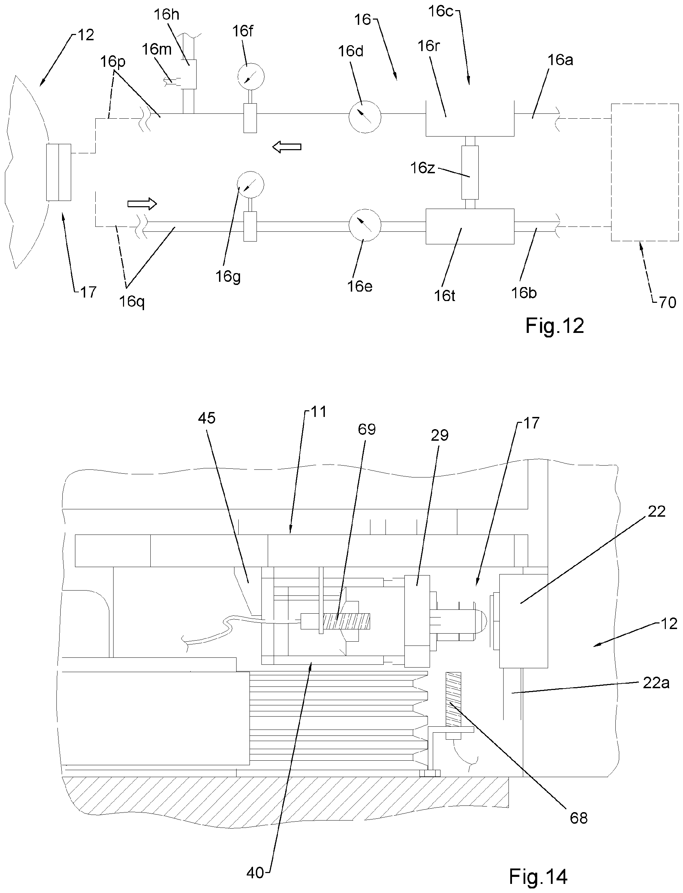

The detection sensor **68** is schematised in figure 14; such detection sensor is fixed to a support bracket in turn positioned on the framework **11** in an available area established when assembling the mixer **10.**

Once through with the processing cycle, or for other reasons, the rotatable bowl **12** must stop; then there intervenes an alignment operative mode, or step, by means of which the rotatable bowl **12** is made to rotate once at a suitable speed, lower than the processing speed; during the aforementioned rotation the sensor detects the marker and the immediate stop of the bowl **12** is actuated.

Given that the masses in question make the alignment position inaccurate, there are allowed millimetric deviations which are then resolved through the centring means, whose pins with frusto-conical ends **63** force the alignment.

The circuit **16** for treating and circulating said cooling fluid is incorporated in the framework **11.**

Alternatively, the circuit **16** is outside the mixer **10** and it is connected to the mixer **10** through reversible connection means **17.**

Such circuit **16,** in the present embodiment, consists of a cooling circuit, and it is designated for cooling the cooling fluid.

Such cooling circuit **16** comprises a tank for accumulating the cooling fluid, suitable to contain such cooling fluid at amounts proportional to the size of the rotatable bowl **12,** given that the larger the bowl, the greater the amount of cooling fluid required to obtain the desired cooling.

In particular, the cooling circuit comprises, as schematised in figure 12:
- a duct **16a** for delivering the cooling fluid coming from a chiller unit **70,** per se known, and directed towards the bowl **12,**
- a duct **16b** for the return of the cooling fluid, from the bowl **12** towards the chiller unit **70,**
- a by-pass unit **16c** configured to enable the circulation of the cooling fluid in the cooling circuit **16** when the reversible connection means **17** are in disconnection configuration, with the rotatable bowl **12** free to rotate and thus to operate,
- a first thermometer **16d** for detecting the temperature in the delivery duct **16a,**
- a second thermometer **16e** for detecting the temperature in the return duct **16b,**
- a first manometer **16f** for detecting the pressure in the delivery duct **16a,**
- a second manometer **16g** for detecting the pressure in the return duct **16b,**
- a delivery pressure relief valve **16h,**
- a discharge **16m** for the pressure relief valve **16h,**
- a delivery pipe **16p** connecting the delivery duct **16a** with the reversible connection means **17,**
- a return pipe **16q** connecting the reversible connection means **17** with the return duct **16b.**

The by-pass unit **16c** comprises a first three-way valve **16r,** arranged on the delivery duct **16a,** a second three-way valve **16t,** arranged on the return duct **16b,** and an intermediate tubular element **16z,** hydraulically connecting the first three-way valve **16r** and the second three-way valve **16t.**

The first **16r** and second **16t** three-way valves are, for example, of the pneumatic control type.

On a compressed air line by means of which the three-way valves **16r** and **16t** are controlled, there is installed a flow regulator, i.e. a pressure regulator filter, so as to be able to control the switching speed of the three-way valves; in particular, such three-way valves are controlled so that the second valve **16t** on the return duct **16b** closes and opens respectively delayed and in advance with respect to the first valve **16r** on the delivery duct **16a,** so as to avoid creating overpressure in the interspace **15** of the bowl **12.**

The reversible connection means **17** also comprise means for checking whether connection or disconnection has occurred.

Such checking means comprise, for example, a pair of sensors fixed in cavities present on the casing of the pneumatic cylinder **40** and provided as accessories thereof.

Such control means also comprise an inductive sensor **69,** visible in figure **14****,** integrally joined with the framework **11,** which detects successful and proper recession of the support plate **29;** such inductive sensor **69** represents a redundant control, required considering potential damage to the bowl **12** which could arise from failure or malfunctioning of the sensors associated to the pneumatic cylinder **40.**

A method for using a mixer with rotatable bowl **10** as defined in claim 13 is also part of the invention.

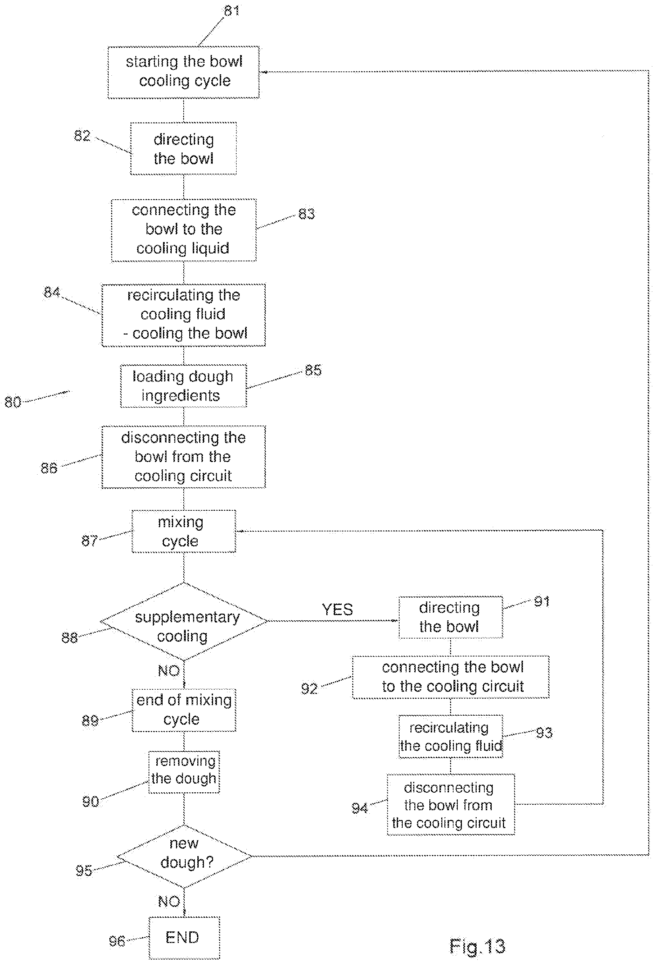

Such method, schematically illustrated in figure 13 and therein indicated in its entirety with number **80,** comprises, in the order below, as outlined in the chart of figure 13, the following operative steps:
- starting a thermal treatment cycle, for example a cooling cycle, for the rotatable bowl **12;** such step is indicated with block **81;**
- directing the rotatable bowl **12;** such step is indicated with block **82;**
- connecting the rotatable bowl **12** to the circuit **16,** for example a cooling circuit; such step is indicated with block **83;**
- recirculating the thermal exchange fluid, for example a cooling fluid, and thermally treating, i.e. cooling, the rotatable bowl **12;** such step is indicated with block **84;**
- loading the rotatable bowl **12** with a dough; such step is indicated with block **85;**
- disconnecting the rotatable bowl **12** from the circuit **16;** such step is indicated with block **86;**
- starting a cycle for mixing the dough loaded in the rotatable bowl **12;** such step is indicated with block **87.**

In this method, the cycle for mixing the dough loaded in the rotatable bowl **12** comprises the rotation of the rotatable bowl **12** around the rotation axis **X** thereof.

Such method also comprises the following operative steps:
- checking whether a supplementary thermal treatment, for example supplementary cooling, of the rotatable bowl **12** is required; such step is indicated with block **88;**
- if supplementary thermal treatment is not required, then complete the mixing cycle and remove the mixed dough; such step is indicated with blocks **89** and **90;**
- if supplementary thermal treatment is required, then follow the subsequent auxiliary operations:
- directing the rotatable bowl **12;** such step is indicated with block **91;** such direction step, around the axis **X,** is actually required for the rotation of the rotatable bowl **12** around the vertical axis **X** during the execution of the mixing cycle **87;**
- connecting the rotatable bowl **12** to the circuit **16;** such step is indicated with block **92;**
- recirculating the thermal exchange fluid and thermally treating the rotatable bowl **12;** such step is indicated with block **93;**
- disconnecting the rotatable bowl **12** from the circuit **16;** such step is indicated with block **94;**
- starting another cycle for mixing the dough loaded in the rotatable bowl **12;** such step is indicated with the same block **87** indicated above.

The method **80** according to the invention comprises, subsequently to the step **90** of removing the dough, the following operative steps:
- checking whether to load new dough; such step is indicated with block **95;**
- if new dough is not to be loaded, then stop using the mixer **10;** such step is indicated with block **96;**
- if new dough is to be loaded, then start a cycle for the thermal treatment of the rotatable bowl **12** as shown in block **81.**

Thus, the loading of the dough to be processed can be carried out with the bowl connected keeping the glycol recirculating in the interspace **15,** or - alternatively - the dough can be loaded with the rotatable bowl disconnected.

Though the mixer **10** and the method **80** according to the invention are described above with thermal treatment means which are cooling means and for cooling during the mixing operations, they shall be deemed similarly usable with thermal treatment means which are heating means and for heating during the mixing operations; similarly, the thermal treatment means shall be deemed as usable for pasteurisation operations, or, still, for maintaining a desired temperature. Basically, it has been observed that the invention attains the pre-set task and objects.

In particular, the invention provides a mixer with rotatable bowl whose bowl can be treated thermally, for example it can be cooled, in a simple and reliable manner, thanks to reversible means for the connection of the means for the thermal treatment, for example cooling means, of the bowl with a circuit for the treatment of the thermal exchange fluid, configured to operate in a connection and disconnection configuration by means of simple and precise translation motions.

In particular, the invention provides a mixer with rotatable bowl whose connection and hydraulic sealing elements are subjected to little or no wear, given that when the reversible connection means are in connection configuration, the sealings operate statically.

Furthermore, the invention provides a mixer with rotatable bowl that is more robust and less subjected to machine shut downs with respect to the similar mixers of the known type.

The invention provides a mixer with rotatable bowl with performance and efficiency not below the mixers of the known type.

In addition, the invention provides a method for using a mixer with rotatable bowl as per the main task.

Basically, the components and materials used, provided they are compatible with the specific use, as well as the dimensions and contingent shapes, may vary depending on the technical needs and the state of the art.

## Claims

1. Mixer (10) with a driven rotatable bowl (12), comprising a support framework (11) for the driven rotatable bowl (12), for containing a dough, inside which there is arranged to operate at least one driven mixing tool, said rotatable bowl (12) comprising an inner container (13) at least laterally surrounded by means for the thermal treatment of such inner container (13), said means for the thermal treatment of the inner container (13) being of the type with thermal exchange fluid, said thermal treatment means comprising reversible connection means (17), for filling said thermal treatment means with a thermal exchange fluid, said reversible connection means (17) being configured to alternatingly take a configuration selected from among
- a connection configuration, with the rotatable bowl (12) inoperative, for introducing and circulating the thermal exchange fluid in said thermal treatment means of said inner container (13),
- a disconnection configuration, with the rotatable bowl (12) available for the rotation, and with said at least one driven mixing tool driven to operate in said rotatable bowl (12),
**characterized in that** said rotatable bowl (12) is configured to rotate, in use configuration, around a vertical axis (X).

2. Mixer according to claim 1, **characterised in that** said rotatable bowl (12) is configured to rotate during the operation of said at least one mixing tool arranged therein.

3. Mixer according to one or more of the preceding claims, **characterised in that** said rotatable bowl (12) is suitable to rotate by angles greater than 360° with respect to said vertical axis (X).

4. Mixer according to one or more of the preceding claims, **characterised in that** said vertical axis (X) coincides with the symmetry axis of said rotatable bowl (12).

5. Mixer according to one or more of the preceding claims, **characterised in that** said thermal treatment means comprise a jacket (14) at least laterally surrounding said inner container (13) to define - with said inner container (13) - an interspace (15) for said thermal exchange fluid.

6. Mixer according to one or more of the preceding claims, **characterised in that** said reversible connection means (17) determine the connection of the thermal treatment means with a circuit (16) for treating and circulating said thermal exchange fluid.

7. Mixer according to one or more of the preceding claims, **characterised in that** said rotatable bowl (12) comprises an inlet mouth (20) and an outlet mouth (21) for said interspace (15).

8. Mixer according to one or more of the preceding claims, **characterised in that** said inlet (20) and outlet (21) mouths are defined on a block (22) fixed to the rotatable bowl (12).

9. Mixer according to one or more of the preceding claims, **characterised in that** said reversible connection means (17) comprise, for each of said inlet (20) and outlet (21) mouths, an automatic quick coupling (23, 24).

10. Mixer according to one or more of the preceding claims, **characterised in that** a said automatic quick coupling (23, 24) is of the male-female type, whose one first part (25, 26) is carried by said block (22), while a second corresponding part (27, 28) is fixed to a moveable support plate (29).

11. Mixer according to one or more of the preceding claims, **characterised in that** said reversible connection means (17) comprise actuator means for moving said moveable support plate (29).

12. Mixer according to one or more of the preceding claims, **characterised in that** in said interspace (15) - between the inner container (13) and jacket (14) - there is defined a labyrinth circuit (50), whose inlet and outlet correspond to said inlet mouth (20) and outlet mouth (21) of the interspace (15), and it is configured to conduct the thermal exchange fluid on the entire available outer surface of the inner container (13).

13. Method (80) for using a mixer with rotatable bowl (10) according to one or more of the preceding claims, comprising, in the order below, the following operative steps:
- starting a cycle for the thermal treatment of the rotatable bowl (12);
- directing the rotatable bowl (12);
- connecting the rotatable bowl (12) to said circuit (16) for treating said thermal exchange fluid;
- recirculating said thermal exchange fluid and thermally treating the rotatable bowl (12);
- loading the rotatable bowl (12) with a dough;
- disconnecting the rotatable bowl (12) from said circuit (16);
- starting a cycle for mixing the dough loaded in the rotatable bowl (12).

14. Method according to the preceding claim, **characterised in that** said cycle for mixing the dough loaded in said rotatable bowl (12) comprises the rotation of said rotatable bowl (12) around the rotation axis (X) thereof.

## Patentansprüche

1. Mischer (10) mit einer angetriebenen drehbaren Schüssel (12), umfassend ein Traggestell (11) für die angetriebene drehbare Schüssel (12) zur Aufnahme eines Teigs, in dem mindestens ein angetriebenes Mischwerkzeug für den Betrieb angeordnet ist, wobei die besagte drehbare Schüssel (12) einen Innenbehälter (13) umfasst, der zumindest seitlich von Wärmebehandlungsmitteln für den Innenbehälter (13) umgeben ist, wobei die besagten Wärmebehandlungsmittel des Innenbehälters (13) vom Typ mit Wärmeübertragerfluid sind, und wobei die besagten Wärmebehandlungsmittel umkehrbare Verbindungsmittel (17) umfassen, um die besagten Wärmebehandlungsmittel mit einem Wärmeübertragerfluid zu füllen, wobei die besagten umkehrbaren Verbindungsmittel (17) so konfiguriert sind, dass sie abwechselnd eine Konfiguration annehmen, die ausgewählt wird aus
- einer Verbindungskonfiguration, bei der die drehbare Schüssel (12) außer Betrieb ist, um das Wärmeübertragerfluid in die besagten Wärmebehandlungsmittel des Innenbehälter (13) einzuführen und zirkulieren zu lassen,
- einer Trennungskonfiguration, bei der die drehbare Schüssel (12) für die Drehung verfügbar ist und bei der das besagte mindestens eine angetriebene Mischwerkzeug angetrieben wird, um in der besagten drehbaren Schüssel (12) zu arbeiten,
**dadurch gekennzeichnet, dass** die drehbare Schüssel (12) so konfiguriert ist, dass sie in der Gebrauchskonfiguration um eine vertikale Achse (X) rotiert.

2. Mischer nach Patentanspruch 1, **dadurch gekennzeichnet, dass** die besagte drehbare Schüssel (12) so konfiguriert ist, dass sie sich während des Betriebs des besagten mindestens einen darin angeordneten Mischwerkzeugs dreht.

3. Mischer nach einem oder mehreren der vorhergehenden Patentansprüche, **dadurch gekennzeichnet, dass** die besagte drehbare Schüssel (12) geeignet ist, sich um Winkel größer als 360° in Bezug auf die besagte vertikale Achse (X) zu drehen.

4. Mischer nach einem oder mehreren der vorangehenden Patentansprüche, **dadurch gekennzeichnet, dass** die vertikale Achse (X) mit der Symmetrieachse der besagten drehbaren Schüssel (12) zusammenfällt.

5. Mischer nach einem oder mehreren der vorhergehenden Patentansprüche, **dadurch gekennzeichnet, dass** die Wärmebehandlungsmittel einen Mantel (14) umfassen, der den besagten Innenbehälter (13) zumindest seitlich umgibt, um mit dem besagten Innenbehälter (13) einen Zwischenraum (15) für das besagte Wärmeübertragerfluid zu definieren.

6. Mischer nach einem oder mehreren der vorhergehenden Patentansprüche, **dadurch gekennzeichnet, dass** die besagten umkehrbaren Verbindungsmittel (17) die Verbindung der Wärmebehandlungsmittel mit einem Kreislauf (16) zum Behandeln und Zirkulieren des besagten Wärmeübertragerfluids bestimmen.

7. Mischer nach einem oder mehreren der vorhergehenden Patentansprüche, **dadurch gekennzeichnet, dass** die besagte drehbare Schüssel (12) eine Einlassöffnung (20) und eine Auslassöffnung (21) für den besagten Zwischenraum (15) aufweist.

8. Mischer nach einem oder mehreren der vorhergehenden Patentansprüche, **dadurch gekennzeichnet, dass** die besagte Einlassöffnung (20) und die besagte Auslassöffnung (21) an einem Block (22) definiert sind, der an der drehbaren Schüssel (12) befestigt ist.

9. Mischer nach einem oder mehreren der vorhergehenden Patentansprüche, **dadurch gekennzeichnet, dass** die besagten umkehrbaren Verbindungsmittel (17) für jede der Einlass- (20) und Auslassöffnungen (21) eine automatische Schnellkupplung (23, 24) umfassen.

10. Mischer nach einem oder mehreren der vorhergehenden Patentansprüche, **dadurch gekennzeichnet, dass** die besagte automatische Schnellkupplung (23, 24) vom Typ Stecker-Buchse ist, mit einem ersten Teil (25, 26), der von dem besagten Block (22) getragen wird, und einem zweiten entsprechenden Teil (27, 28) an einer beweglichen Trägerplatte (29) befestigt ist.

11. Mischer nach einem oder mehreren der vorhergehenden Patentansprüche, **dadurch gekennzeichnet, dass** die besagten umkehrbaren Verbindungsmittel (17) Betätigungsmittel zum Bewegen der besagten beweglichen Trägerplatte (29) umfassen.

12. Mischer nach einem oder mehreren der vorhergehenden Patentansprüche, **dadurch gekennzeichnet, dass** in dem besagten Zwischenraum (15) - zwischen dem Innenbehälter (13) und dem Mantel (14) - ein Labyrinth-Kreislauf (50) definiert ist, dessen Einlass und Auslass der besagten Einlassöffnung (20) und Auslassöffnung (21) des Zwischenraums (15) entsprechen, und der so konfiguriert ist, dass er das Wärmeübertragerfluid auf der gesamten verfügbaren Außenfläche des Innenbehälters (13) leitet.

13. Verfahren (80) zur Verwendung eines Mischers mit drehbarer Schüssel (10) nach einem oder mehreren der vorhergehenden Patentansprüche, umfassend die folgenden Arbeitsschritte in der angegebenen Reihenfolge:
- Starten eines Zyklus zur Wärmebehandlung der drehbaren Schüssel (12);
- Ausrichten der drehbaren Schüssel (12);
- Verbinden der drehbaren Schüssel (12) mit dem besagten Kreislauf (16) zur Behandlung des besagten Wärmeübertragerfluids;
- Rezirkulation des besagten Wärmeübertragerfluids und Wärmebehandlung der drehbaren Schüssel (12);
- Beladen der drehbaren Schüssel (12) mit einem Teig;
- Trennen der drehbaren Schüssel (12) von dem besagten Kreislauf (16);
- Starten eines Zyklus zum Mischen des in die drehbare Schüssel (12) geladenen Teigs.

14. Verfahren nach dem vorhergehenden Patentanspruch, **dadurch gekennzeichnet, dass** der besagte Zyklus zum Mischen des in die besagte drehbare Schüssel (12) geladenen Teigs die Drehung der besagten drehbaren Schüssel (12) um ihre Drehachse (X) umfasst.

## Revendications

1. Mélangeur (10) avec un récipient rotatif motorisé (12), comprenant un cadre de support (11) pour le récipient rotatif motorisé (12), pour contenir une pâte, à l'intérieur duquel est présent au moins un outil motorisé de mélange apte à fonctionner, ledit récipient rotatif (12) comprenant un conteneur intérieur (13) au moins latéralement entouré par des moyens aptes au traitement thermique dudit conteneur intérieur (13), lesdits moyens pour le traitement thermique du conteneur intérieur (13) étant du type avec fluide d'échange thermique, lesdits moyens pour le traitement thermique comprenant des moyens de connexion réversibles (17), pour remplir lesdits moyens de traitement thermique avec un fluide d'échange thermique, lesdits moyens de connexion réversibles (17) étant configurés de manière à assumer alternativement une configuration sélectionnée entre
- une configuration de connexion, avec le récipient rotatif (12) inopérant, pour l'introduction et la circulation du fluide d'échange thermique dans lesdits moyens pour le traitement thermique dudit conteneur intérieur (13),
- une configuration de déconnexion, avec le récipient rotatif (12) disponible pour la rotation, et avec ledit au moins un outil de mélange actionné pour fonctionner dans ledit récipient rotatif (12),
**caractérisé en ce que** ledit récipient rotatif (12) est configuré pour tourner, dans une configuration d'utilisation, autour d'un axe vertical (X).

2. Mélangeur selon la revendication 1, **caractérisé en ce que** ledit récipient rotatif (12) est configuré pour tourner durant le fonctionnement dudit au moins un outil de mélange disposé dans celui-ci.

3. Mélangeur selon l'une ou plusieurs des revendications précédentes, **caractérisé en ce que** ledit récipient rotatif (12) est indiqué pour tourner d'angles plus grands de 360° par rapport audit axe vertical (X).

4. Mélangeur selon l'une ou plusieurs des revendications précédentes, **caractérisé en ce que** ledit axe vertical (X) coïncide avec l'axe de symétrie dudit récipient rotatif (12).

5. Mélangeur selon l'une ou plusieurs des revendications précédentes, **caractérisé en ce que** lesdits moyens pour le traitement thermique comprennent une chemise (14) entourant au moins latéralement ledit conteneur intérieur (13) pour définir - avec ledit conteneur intérieur (13) - un espace interne (15) pour ledit fluide d'échange thermique.

6. Mélangeur selon l'une ou plusieurs des revendications précédentes, **caractérisé en ce que** lesdits moyens de connexion réversibles (17) déterminent la connexion des moyens pour le traitement thermique avec un circuit (16) pour le traitement et la circulation dudit fluide d'échange thermique.

7. Mélangeur selon l'une ou plusieurs des revendications précédentes, **caractérisé en ce que** ledit récipient rotatif (12) comprend une bouche d'entrée (20) et une bouche de sortie (21) pour ledit espace interne (15).

8. Mélangeur selon l'une ou plusieurs des revendications précédentes, **caractérisé en ce que** lesdites bouches d'entrée (20) et de sortie (21) sont définies sur un bloc (22) fixé au récipient rotatif (12).

9. Mélangeur selon l'une ou plusieurs des revendications précédentes, **caractérisé en ce que** lesdits moyens de connexion réversibles (17) comprennent, pour chacune desdites bouches d'entrée (20) et de sortie (21), un raccordement rapide automatique (23, 24).

10. Mélangeur selon l'une ou plusieurs des revendications précédentes, **caractérisé en ce que** ledit raccordement rapide automatique (23, 24) est du type mêle-femelle, dont une première partie (25, 26) est soutenue par ledit bloc (22), alors que une deuxième partie correspondante (27, 28) est fixée à une plaque de support amovible (29).

11. Mélangeur selon l'une ou plusieurs des revendications précédentes, **caractérisé en ce que** lesdits moyens de connexion réversibles (17) comprennent des moyens actionneurs aptes à déplacer ladite plaque de support amovible (29).

12. Mélangeur selon l'une ou plusieurs des revendications précédentes, **caractérisé en ce que** dans ledit espace interne (15) - entre ledit conteneur intérieur (13) et la chemise (14) - est défini un circuit à labyrinthe (50), dont l'entrée et la sortie correspondent à lesdites bouche d'entrée (20) et bouche de sortie (21) de l'espace interne (15), et il est configuré pour acheminer le fluide d'échange thermique sur toute la surface extérieure disponible du conteneur intérieur (13).

13. Méthode (80) pour l'utilisation d'un mélangeur avec récipient rotatif (10) selon l'une ou plusieurs des revendications précédentes, comprenant, dans l'ordre indiqué ci-dessous, les étapes opérationnelles suivantes:
- démarrage d'un cycle pour le traitement thermique du récipient rotatif (12);
- direction du récipient rotatif (12);
- connexion du récipient rotatif (12) audit circuit (16) pour le traitement dudit fluide d'échange thermique;
- recirculation dudit fluide d'échange thermique et traitement thermique du récipient rotatif (12);
- chargement du récipient rotatif (12) avec une pâte;
- déconnexion du récipient rotatif (12) dudit circuit (16);
- démarrage d'un cycle pour le mélange de la pâte chargée dans le récipient rotatif (12).

14. Méthode selon la revendication précédente, **caractérisé en ce que** ledit cycle pour mélanger la pâte chargée dans ledit récipient rotatif (12) comprend la rotation dudit récipient rotatif (12) autour de son axe de rotation (X).
